# EUROPEAN PATENT SPECIFICATION

(11) **EP 2 172 359 B1**
(45) Date of publication and mention of the grant of the patent: **19.12.2012**
(21) Application number: 10151039.4
(22) Date of filing: 20.09.2005
(51) Int. Cl.: B60K 28/16, B60L 3/10, B60T 8/175, B66F 17/00, B60T 8/172, B66F 9/24

(54) **Improved control system for an industrial truck**
Verbessertes Kontrollsystem für ein Flurförderfahrzeug
Système de commande améliorée pour un chariot industriel

(43) Date of publication of application: 07.04.2010
(62) Divisional of application: 05108670.0
(73) Proprietor: Atlet AB, 43582 Mölnlycke (SE)
(72) Inventor: Ulmestrand, Dan, 425 65, HISINGS KÄRRA (SE); von Brömsen, Stefan, 435 30, MÖLNLYCKE (SE); Berggren, Peter, 435 31, MÖLNLYCKE (SE)
(74) Representative: Lind, Urban Arvid Oskar

(56) References cited:
- EP-A- 0 664 273
- EP-A- 1 270 495
- DE-C1- 4 011 974
- US-A- 4 075 538
- US-A- 5 091 685
- US-A- 5 272 634
- US-A1- 2003 156 934

## Description

### Field of the invention

The present invention relates to an improved control system for an industrial truck. Further, the invention relates to a method for such improved control.

### Background of the invention

Industrial material handling vehicles, here commonly referred to as industrial trucks, such as lift trucks or pallet trucks, are commonly found in warehouses, factories, shipping yards, and, generally, wherever pallets, packages, or loads of goods are required to be moved from place to place. In the following particularly fork lift trucks will be discussed, but it will be appreciated that corresponding problems arise also in other types of industrial trucks, and that corresponding operating means can be used also for such vehicles.

In package picking and delivery applications, it is generally desirable to move as many packages as possible, in as little time as possible, such that packages or pallets can be delivered with a high degree of efficiency. Therefore, lift and pallet trucks are typically operated at a relatively high rate of speed, whereby the risk of hazardous situations are ever existing. For e.g. there is a risk of too high weight being carried by the trucks, insufficient braking capacity, etc. Further, a common problem for industrial trucks in today's working environment is that the wear of the trucks, and especially the driving wheels, are increased, due to slipping and spinning, etc, which increases the need for service and repair, and thus increases the operating costs for the trucks.

For example, if the ground is in a slippery condition or loads are inappropriately distributed the problem which is frequently encountered in industrial trucks is that the driving wheel or driving wheels will slip. Furthermore, since the driven wheel frequently is also the wheel to be steered such a slip leads to poor maneuvering characteristics. In addition, the slip causes an increase in wear to the tires or their surfaces. The efficiency of the drive deteriorates drastically because the driving power is not turned into kinetic energy. Accordingly, this reduces the kinetic energy which can be recovered during a braking operation. If braking is done via the drive an increase in slip will naturally lead to a clear reduction of the braking torque. To this end, different types of so-called anti-lock braking systems has been proposed in the past. E.g. US 6 799 652 discloses such a system, in which the speed of the driving wheel is compared to the speed of at least one non-driving wheel in order to detect slipping. Thus, the slip is determined during braking or driving, and, hence, an appropriate action onto the braking system prevents the slip from assuming excessively large rates, specifically in order to avoid a lock-up. However, implementation of this system is relatively complicated and expensive, and does only partly alleviate the above-discussed problems.

In EP 0 798 260 and EP 0 798 261 methods for determining the displacement of the load forks in a hydraulic system are disclosed. In these methods, the current or voltage supplied to the hydraulic system is used for providing an estimate of the flow of hydraulic oil in the system, which in turn is used to provide a measure of the displacement. However, these methods are only usable in a limited number of industrial trucks, using e.g. specific types of electrical motors. Further, these known systems are relatively expensive and difficult to implement.

EP 0 664 273, which shows the preamble of claims 1 and 7, discloses an industrial truck having a hydraulic lifting system, and with electric motors controlled based on sensors sensing the angular position and angular velocity of the motors. However, there are in this system no possibilities of determining impacts.

US 4 075 538 discloses a system for use in a traction vehicle, and in particular a rail bound traction vehicle. The system is not intended to be used in an industrial truck. This document discloses a relatively complex detection system to detect slipping and sliding, which uses additional speed sensors provided at the wheels. There is no disclosure of any impact detection functionality. US 5 272 634 discloses an anti-blocking system similar to the system disclosed in US 4 075 538.

EP 1 270 495 discloses a system for determining the weight of a load, and is not at all concerned with impact detection.

There is therefore a need for an improved control systems for industrial trucks, which could be used e.g. for automatic control of the truck in certain situations, and thereby reduce the wear on the truck, and improve the controllability of the truck in order to improve safety, etc. Even though many such solutions for improved control systems have been proposed during the years, most of said systems are in general not sufficient for avoiding the above-related problems, and/ or are too expensive and difficult to implement.

### Summary of the invention

It is therefore an object of the present invention to provide a control system for an industrial truck, and a method for operation of the same, which is more effective and/or is more cost efficient than previously known systems, and which thereby alleviates the above-discussed problems.

This object is achieved with a control system and a method according to the appended claims.

According to a first aspect of the invention there is provided a method for controlling an industrial truck according to claim 1.

The controller could be realized in an already existing control means on the truck, such as in a vehicle controller or a motor controller, or be realized as a separate controller unit, or a combination of the two.

The real time speed signal is preferably a signal representing the revolution speed of a revolving part of the motor, i.e. an rpm signal. Such a signal can preferably be provided by mean of a sensor. The sensor is preferably associated with the motor, and can e.g. be a detector, such as a quadrature detector, arranged on the driving wheel, or a gauge measuring the rotation of the moving part in a hydraulic pump. Such a real-time feed back signal to be sent to a controller is per se previously known, and is commonly used in industrial trucks for controlling the speed and power of the power generating system. Accordingly, the method and control system according to this invention is relatively easy and cost effective to implement, since much of the required hardware are already in place in conventional trucks of today.

The sensor for measuring the actual motor speed in real time can be realized in hardware, but can also be realized in software, such as being based on a calculation algorithm in the motor controller.

The real time speed signal is preferably provided continuously over at least a certain period of time, as a continuous analogue signal or as a continuous digital signal with a high enough resolution and bit rate to provide real time information to the control system.

The secondary data can be used to control the truck in a number of different ways, such as one or several of the following:
- Activation of corrective measures, such as activation of anti-spin or anti-brake lock functionalities, adjustment of the pressure applied on the drive wheel, etc.
- Activation of an alarm, such as a summer or an alarm light.
- Activation of restrictions on the operability, such as lowering the maximum drive speed of the truck, the maximum lifting height or the maximum steering angle, etc.

By the above-defined analysis of the sensor signal representing the actual motor speed in real time it becomes possible to detect a number of different abnormal or erroneous operating conditions, and/or situations which may not be abnormal, but which requires certain safety measures etc.
The present invention provides means for detection of collision impacts, such as e.g. occurs when there is collision between the truck and racking, pallets, doors, etc. Such collision impact detection may be used to bring attention to careless operation, register possible damage in a database, to alert a service need, etc.

In addition, the inventive method make it possible to detect one or several of the following conditions and parameters:
- Determination of a need for preventive maintenance, when e.g. threshold values for certain parameters are exceeded, such as the number of impacts of a certain magnitude.
- Determination of energy wasting conditions, to be used in e.g. an energy saving system.
According to the present invention, the step of analyzing involves comparing said signal to e.g. predetermined ramp data for acceleration/deceleration and/or to a drive speed control signal provided to the traction motor, for generation of secondary data related to detection of collision impact on the truck.

In the analysis of predetermined ramp data, it is possible to determine abnormalities such as a too steep ramp in acceleration/deceleration, abnormal fluctuations in the ramp, etc. With "abnormal" is in this case meant conditions that would normally not arise during acceleration or deceleration operations when there is no slipping of the driving wheel against the underlying surface.

In the comparison with the drive speed control signal provided to the traction motor, a comparison is made between the ordered, intended acceleration/deceleration, and the actual, resulting acceleration/deceleration of the drive wheel. Any differences between these indicates that the drive wheel is not delivering the acceleration/deceleration as requested, i.e. the acceleration/deceleration is either to low or to high, which is indicative of slipping or spinning on the floor.

The intended acceleration/deceleration is in this case normally based on a signal generated by the vehicle driver actuating an accelerator pedal or hand control, by which action a desired torque is preset for the drive, e.g. via a motor controller.

The inventive method is preferably applied to a motor of an industrial truck which is constituted by an electric motor or a hydraulic engine.

According to another aspect of the invention, there is provided a control system according to claim 7.

By means of this aspect, similar advantages as discussed above in relation to the first aspect are obtainable.

These and other aspects of the invention will be apparent from and elicidated with reference to the embodiments described hereinafter.

### Brief description of the drawings

For exemplifying purposes, the invention will be described in closer detail in the following with reference to embodiments thereof illustrated in the attached drawings, wherein:
Fig 1 is a schematic overview of an exemplary industrial truck in which can be used in conjunction with the present invention;
Fig 2 is a schematic block diagram of the industrial truck in fig. 1; and
Fig 3 is a flow chart illustrating a method for detecting slipping.

### Description of preferred embodiments

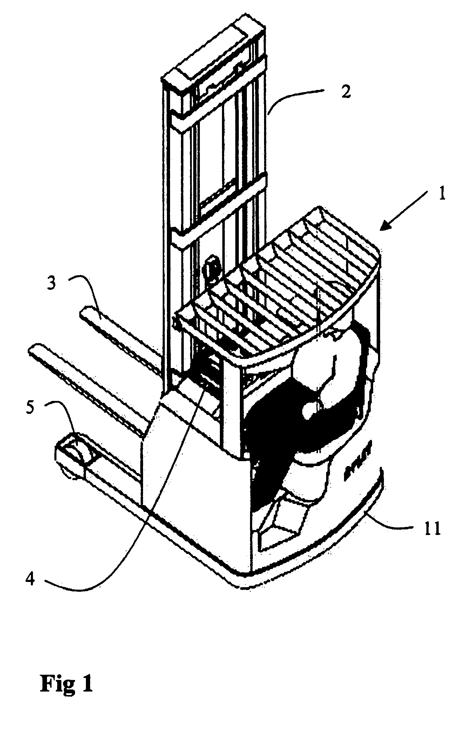

Referring now to Fig. 1, there is shown a perspective view of an industrial truck 1, in the preferred embodiment being referred to as a fork lift truck. Vehicle 1 comprises a frame 11, to which are mounted the major operating components of the vehicle 1, such as a main telescoping mast 2, for lifting of forks 3, an operator control station 4, two non-steerable wheels 5, and a drive wheel 6 (not visible in fig 1).

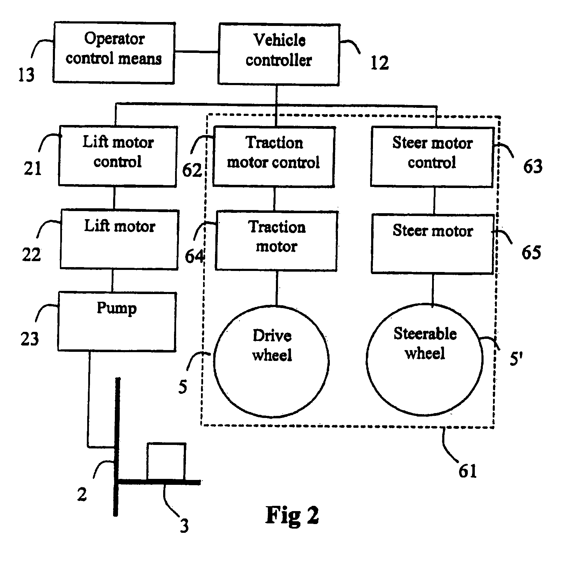

Referring now to Fig. 2, a block diagram of the lift truck 1 in Fig 1 is illustrated. The lift truck comprises a vehicle controller 12 which receives operator input signals from operator control means 13, such as handles, key switches, pedals, stick controllers, steer wheels, control buttons etc. Based on the received signals , the controller provides command signals to each of a lift motor control 21 and a drive system 61 including both a traction motor control 62 and a steer motor control 63, as is per se known in the art. The drive system provides a motive force for driving the lift truck in a selected direction, while the lift motor control 21 drives forks 3 along the mast 2 to raise or lower a load. The lift truck 1 and vehicle controller 12 are powered by an electric energy source, such as one or more battery (not shown).

The vehicle controller 12 may be a separate unit, or be integrated with one or several of the other controllers 21, 62 and 63.

The traction motor control 62 drives a traction motor 64 which is connected to a drive wheel 5 to provide motive force to the lift truck. The speed of the traction motor 64 and associated wheels is selected by the operator from an operator control handle or the like, and is typically monitored and controlled through feedback provided by an encoder or other feedback device coupled to the traction motor 64. The wheel 5 may also be connected to a friction brake through the drive motor, providing both a service and parking brake function for the lift truck 1. The traction motor 64 is typically an electric motor.

The steer motor control 63 is connected to drive a steer motor 65 and associated steerable wheel 5' in a direction selected by the operator. An encoder or other feedback device is typically coupled to the steer motor, and a signal is provided to the steer motor control 63 to maintain the direction of travel of the lift truck 1 within a predetermined range of the selected direction of motion. The steerable wheel 5' and the drive wheel 5 may be one and the same, i.e. a single, combination steering and drive wheel 5 that is driven by the traction motor 64 via an internal drive shaft (not shown).

The lift motor control 21 provides command signals to control a lift motor 22 which is connected to a hydraulic circuit including a pump 23 for driving the forks 3 along the mast 2, thereby moving the load up or down. In some applications, the mast 2 can be a telescoping mast, whereby additional hydraulic circuitry is provided to raise or lower the mast 2 as well as the forks 3.

Hereby, a sensor for measuring the actual traction motor speed in real time is provided, and a corresponding real time speed signal representing the actual motor speed in real time is generated in said sensor and transmitted to the controller. In the controller the received speed signal is compared to predetermined data and/or to a speed control signal provided to the motor, for generation of secondary control that is usable for controlling the truck.

### Anti spin traction control and anti brake lock control

The traction motor for driving the drive wheel of the truck is provided with a sensor for providing real time speed data of the drive wheel. The sensor can e.g. be sensors which measure the number of revolutions of the wheels and their circumferential speed, such as quadrature gages, which are per se well known in the art. However, the sensor may also be realized in software, e.g. by means of a calculation algorithm in the motor controller.

By means of the speed signal generated by the sensor, the actual speed of the wheel is determinable, and this can serve for determining the slip by making a comparison to predetermined ramp data for acceleration/deceleration and/or to a drive speed control signal provided to the traction motor from the traction motor control. If positive torques are produced (in a forward direction) such as in driving forwards and braking backwards a positive slip will result. On the contrary, if torques are produced in a backward direction (in braking during a forward travel and driving in a backward travel) a negative slip will result.
Slipping may be determined by means of comparing the speed signal generated by the sensor during acceleration/deceleration with predetermined data. For example, it is possible to determine a maximum acceleration A' or deceleration D' that is achievable for the truck. Such data is determinable by test measurements, by theoretic calculations, etc. The derivate of the actual speed signal, AS', or the differential quotient of the speed signal between different times, can then be compared to the maximum acceleration A' and deceleration D', and if AS' is higher than A' or lower than D' a slipping condition is determinable. Hence, in the analysis of predetermined ramp data, it is possible to determine abnormalities such as a too steep ramp in acceleration/deceleration, abnormal fluctuations in the ramp, etc, i.e. conditions that would normally not arise during acceleration or deceleration operations when there is no slipping of the driving wheel against the underlying surface.

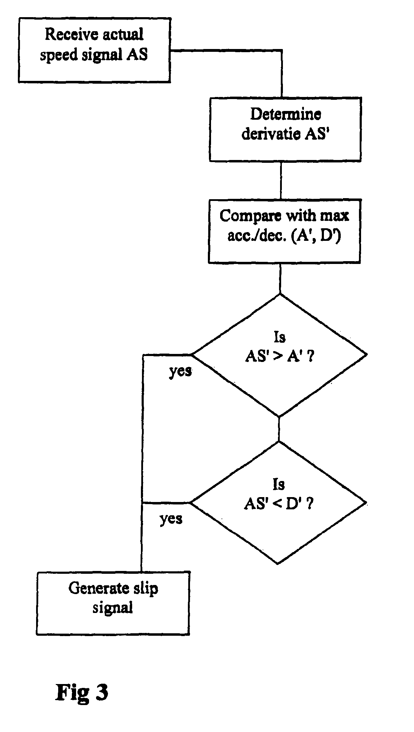

A control method using a combination of the above-discussed comparisons for detecting slipping is illustrated in the flow chart of Fig. 3.

The secondary data indicative of such slipping and sliding can be used for controlling the speed control signal sent to the traction motor, in order to provide an anti-brake lock and/or an anti-spin functionality. Hereby, the controller may automatically adjust the ordered speed to the same value as the present actual speed, and thereafter gradually restore the ordered speed to what was originally requested, as long as the ordered speed of the operator exceeds the present actual speed. Hereby, the amount of the torque of the driving motor is reduced in dependence from the difference between the actual speed and the ordered speed. Implementation of anti-spin and anti-brake lock functionality is per se previously known, and the secondary input data as generated by means of the present invention may be used as input in essentially all such previously known systems. The larger the slip is the larger will be the corrective moment so that it is sure anyway that the torque which is the respective optimum will be applied to the driving wheel or the braked wheel.

As a complement, additional input for recognition of slipping may also be used, in order to make the determination even more reliable. For example, the actual speed signal AS may be compared to a speed signal from one or several of the other wheels of the lifting truck, e.g. in the way disclosed in US 6 799 652 (said document hereby incorporated by reference).

### Impact detection

According to the present invention, collision impacts are detected.

It is possible to distinguish between slipping and impacts in various ways. For example, if the difference between the difference between the derivative AS' and the maximum deceleration D' exceeds a certain threshold value, this may also be used as an indication of the occurrence of an impact. Several such threshold values may also be used to determined impacts of different severities. Different threshold values may also be used in dependence on the actual steering angle being used.

The above-discussed way of detecting and determining impacts may also be combined with other impact detection means, such as accelerometer sensors and the like, which are per se previously known in the art, for provision of an even more reliable detection of such events.

The secondary data indicative of such impacts is used for controlling the lifting truck in various ways. For example, it may be used for an automatic request for inspection, maintenance or service of the lifting truck (see below). Still further, it may also be used for activation of safety measures, such as automatic brake activation, automatic decrease of the traction, or the like.

### Precautionary call for service

The detection of impacts may be used for an automatic request for inspection, maintenance or service of the lifting truck. For example, a determination of a need for precautionary service can be made when e.g. threshold values for certain parameters are exceeded, such asthe number of impacts of a certain magnitude exceeds a threshold value, since repeated impacts may cause defects due to the shaking and vibration of certain parts of the lifting truck.

### Further alternative embodiments

The invention has now been described by a number of exemplary embodiments. However, it should be appreciated by someone skilled in the art, that many further alternatives are feasible. For example, the implementation of the control method could be accomplished in different ways, such as in especially dedicated hardware or in software for control of already existing control means. Such and other obvious modifications must be considered to be within the scope of the present invention, as it is defined by the appended claims.

## Claims

1. A method for controlling an industrial truck (1) comprising at least one traction motor (64) for driving a wheel (5) of the truck, comprising the steps:
providing a real time speed signal representing the actual motor speed in real time to a controller (12, 62);
**characterized by** the additional steps of:
analyzing, in said controller, the received speed signal by comparing a differential or derivative of said speed signal to predetermined acceleration/deceleration data and/or to a drive speed control signal provided to the at least one traction motor (64);
generating secondary control data related to detection of collision impact on the truck (1) based on said analysis; and
using said secondary control data for controlling the truck (1).

2. The method of claim 1, wherein the step of analyzing determines if the differential or derivative of said speed signal and a predetermined maximum deceleration exceeds a predetermined threshold value.

3. The method of claim 2, wherein several predetermined threshold values are provided, enabling determination of impacts of different severities.

4. The method of claim 2 or 3, wherein different threshold values are used in dependence of the actual steering angle being used.

5. The method of any one of the preceding claims, wherein the secondary control data is used to control the truck (1) by generation of automatic requests for inspection, maintenance or service of the truck.

6. The method of any one of the preceding claims, wherein the secondary control data is used to control the truck (1) by activation of safety measures, such as automatic brake activation or automatic decrease of the traction.

7. A control system for an industrial truck (1) comprising at least one traction motor (64) for driving a drive wheel (5) of the truck, comprising:
means for providing a measure of the actual motor speed in real time;
a controller (12, 62); and
a signal connection for transmitting a real time speed signal representing the actual motor speed in real time to the controller (12, 62);
**characterized in that** said controller (12, 62) is arranged to analyze a differential or derivative of the received speed signal by comparing it to predetermined acceleration/deceleration data for acceleration/deceleration and/or to a drive speed control signal provided to the at least one traction motor (64), and for generating secondary control data related to detection of collision impact on the truck (1) based on said analysis, said secondary control data being usable for controlling the truck.

8. The control system of claim 7, wherein the controller is arranged to analyze the differential or derivative of said speed signal and a predetermined maximum deceleration to determined whether it exceeds a predetermined threshold value.

9. The control system of claim 8, wherein several predetermined threshold values are provided, enabling determination of impacts of different severities.

10. The control system of claim 8 or 9, wherein different threshold values are used in dependence of the actual steering angle being used.

11. The control system of any one of the claims 7-10, wherein the secondary control data is used to control the truck (1) by generation of automatic requests for inspection, maintenance or service of the truck.

12. The control system of any one of the claims 7-11, wherein the secondary control data is used to control the truck (1) by activation of safety measures, such as automatic brake activation or automatic decrease of the traction.

13. An industrial truck (1) having a control system according to any one of the claims 7-12.

## Patentansprüche

1. Verfahren zum Steuern eines Flurförderfahrzeugs (1), das wenigstens einen Fahrmotor (64) zum Antreiben eines Rades (5) des Fahrzeugs umfasst, wobei das Verfahren folgende Schritte umfasst:
das Bereitstellen eines Echtzeit-Drehzahlsignals, das die tatsächliche Motordrehzahl darstellt, für ein Steuergerät (12, 62) in Echtzeit;
**gekennzeichnet durch** die folgenden zusätzlichen Schritte:
das Analysieren des empfangenen Drehzahlsignals, in dem Steuergerät, **durch** das Vergleichen eines Differentials oder einer Ableitung des Drehzahlsignals mit vorbestimmten Beschleunigungs-/Verzögerungsdaten und/oder mit einem Antriebsdrehzahl-Steuersignal, das für den wenigstens einen Fahrmotor (64) bereitgestellt wird;
das Erzeugen von sekundären Steuerdaten, die mit dem Erkennen eines Kollisionsaufpralls an dem Fahrzeug (1) verbunden sind, auf der Grundlage der Analyse und
das Verwenden der sekundären Steuerdaten zum Steuern des Fahrzeugs (1).

2. Verfahren nach Anspruch 1, wobei der Schritt des Analysierens feststellt, ob das Differential oder die Ableitung des Drehzahlsignals und eine vorbestimmte maximale Verzögerung einen vorbestimmten Schwellenwert überschreiten.

3. Verfahren nach Anspruch 2, wobei mehrere vorbestimmte Schwellenwerte bereitgestellt werden, was die Feststellung von Aufprallen mit unterschiedlichen Schweregraden ermöglicht.

4. Verfahren nach Anspruch 2 oder 3, wobei in Abhängigkeit von dem tatsächlichen verwendeten Lenkwinkel unterschiedliche Schwellenwerte verwendet werden.

5. Verfahren nach einem der vorhergehenden Ansprüche, wobei die sekundären Steuerdaten dazu verwendet werden, das Fahrzeug (1) durch eine Erzeugung von automatischen Anforderungen für eine Untersuchung, Instandhaltung oder Wartung des Fahrzeugs zu steuern.

6. Verfahren nach einem der vorhergehenden Ansprüche, wobei die sekundären Steuerdaten dazu verwendet werden, das Fahrzeug (1) durch eine Aktivierung von Sicherheitsmaßnahmen, wie beispielsweise eine automatische Bremsenbetätigung oder eine automatische Verringerung der Zugkraft, zu steuern.

7. Steuerungssystem für ein Flurförderfahrzeug (1), das wenigstens einen Fahrmotor (64) zum Antreiben eines Rades (5) des Fahrzeugs umfasst, wobei das System Folgendes umfasst:
Mittel für das Bereitstellen eines Maßes der tatsächlichen Motordrehzahl in Echtzeit;
ein Steuergerät (12, 62) und
eine Signalverbindung zum Übertragen eines Echtzeit-Drehzahlsignals, das die tatsächliche Motordrehzahl darstellt, an das Steuergerät (12, 62) in Echtzeit;
**dadurch gekennzeichnet, dass** das Steuergerät (12, 62) dafür angeordnet ist, ein Differential oder eine Ableitung des empfangenen Drehzahlsignals zu analysieren durch das Vergleichen derselben mit vorbestimmten Beschleunigungs-/Verzögerungsdaten zur Beschleunigung/Verzögerung und/oder mit einem Antriebsdrehzahl-Steuersignal, das für den wenigstens einen Fahrmotor (64) bereitgestellt wird, und für das Erzeugen von sekundären Steuerdaten, die mit dem Erkennen eines Kollisionsaufpralls an dem Fahrzeug (1) verbunden sind, auf der Grundlage der Analyse, wobei die sekundären Steuerdaten zum Steuern des Fahrzeugs verwendet werden können.

8. Steuerungssystem nach Anspruch 7, wobei das Steuergerät dafür angeordnet ist, das Differential oder die Ableitung des Drehzahlsignals und eine vorbestimmte maximale Verzögerung zu analysieren, um festzustellen, ob sie einen vorbestimmten Schwellenwert überschreiten.

9. Steuerungssystem nach Anspruch 8, wobei mehrere vorbestimmte Schwellenwerte bereitgestellt werden, was die Feststellung von Aufprallen mit unterschiedlichen Schweregraden ermöglicht.

10. Steuerungssystem nach Anspruch 8 oder 9, wobei in Abhängigkeit von dem tatsächlichen verwendeten Lenkwinkel unterschiedliche Schwellenwerte verwendet werden.

11. Steuerungssystem nach einem der Ansprüche 7 bis 10, wobei die sekundären Steuerdaten dazu verwendet werden, das Fahrzeug (1) durch eine Erzeugung von automatischen Anforderungen für eine Untersuchung, Instandhaltung oder Wartung des Fahrzeugs zu steuern.

12. Steuerungssystem nach einem der Ansprüche 7 bis 11, wobei die sekundären Steuerdaten dazu verwendet werden, das Fahrzeug (1) durch eine Aktivierung von Sicherheitsmaßnahmen, wie beispielsweise eine automatische Bremsenbetätigung oder eine automatische Verringerung der Zugkraft, zu steuern.

13. Flurförderfahrzeug (1), das ein Steuerungssystem nach einem der Ansprüche 7 bis 12 hat.

## Revendications

1. Procédé de commande d'un chariot industriel (1) comprenant au moins un moteur de traction (64) pour entraîner une roue (5) du chariot, comprenant les étapes consistant à :
fournir un signal de vitesse en temps réel représentant la vitesse de moteur effective en temps réel à un contrôleur (12, 62) ;
**caractérisé par** les étapes additionnelles consistant à :
analyser, dans ledit contrôleur, le signal de vitesse reçu en comparant un différentiel ou une dérivée dudit signal de vitesse avec les données d'accélération/décélération prédéterminées et/ou avec un signal de commande de vitesse d'entraînement fourni à au moins un moteur de traction (64) ;
générer des données de commande secondaires relatives à la détection d'impact de collision sur le chariot (1) sur la base de ladite analyse ; et
utiliser lesdites données de commande secondaires pour commander le chariot (1).

2. Procédé selon la revendication 1, dans lequel l'étape d'analyse détermine si le différentiel ou la dérivée dudit signal de vitesse et une décélération maximale prédéterminée excède une valeur de seuil prédéterminée.

3. Procédé selon la revendication 2, dans lequel plusieurs valeurs de seuil prédéterminées sont fournies, permettant la détermination d'impacts de différentes gravités.

4. Procédé selon les revendications 2 ou 3, dans lequel des valeurs de seuil différentes sont utilisées en fonction de l'angle de direction effectif étant utilisé.

5. Procédé selon une quelconque des revendications précédentes, dans lequel les données de commande secondaires sont utilisées pour commander le chariot (1) en générant des demandes automatiques d'inspection, de maintenance ou de service du chariot.

6. Procédé selon une quelconque des revendications précédentes, dans lequel les données de commande secondaires sont utilisées pour commander le chariot (1) en activant des mesures de sécurité, telles que l'activation automatique des freins ou le diminution automatique de la traction.

7. Système de commande d'un chariot industriel (1) comprenant au moins un moteur de traction (64) pour entraîner une roue motrice (5) du chariot, comprenant :
un moyen de fourniture d'une mesure de la vitesse effective du moteur en temps réel ;
un contrôleur (13, 62) ; et
une connexion de signal pour transmettre un signal de vitesse en temps réel représentant la vitesse d moteur effective en temps réel au contrôleur (12, 62) ;
**caractérisé en ce que** ledit contrôleur (12, 62) est agencé afin d'analyser un différentiel ou une dérivée du signal de vitesse reçu en le comparant avec des données d'accélération/décélération prédéterminées en vue d'une accélération/décélération et/ou avec un signal de commande de vitesse d'entraînement fourni à au moins un moteur de traction (64), et pour générer des données de commande secondaires relatives à la détection d'impact de collision sur le chariot (1) sur la base de ladite analyse, lesdites données de commande secondaires étant utilisables pour commander le chariot.

8. Système de commande selon la revendication 7, dans lequel le contrôleur est agencé afin d'analyser le différentiel ou la dérivée dudit signal de vitesse et une décélération maximale prédéterminée pour déterminer si elle excède une valeur de seuil prédéterminée.

9. Système de commande selon la revendication 8, dans lequel plusieurs valeurs de seuil prédéterminées sont fournies, permettant la détermination d'impacts de gravités différentes.

10. Système de commande selon les revendications 8 ou 9, dans lequel différentes valeurs de seuil sont utilisées en fonction de l'angle de direction effectif étant utilisé.

11. Système de commande selon une quelconque des revendications 7 à 10, dans lequel les données de commande secondaires sont utilisées pour commander le chariot (1) en générant des demandes automatiques d'inspection, de maintenance ou de service du chariot.

12. Système de commande selon une quelconque des revendications 7 à 11, dans lequel les données de commande secondaires sont utilisées pour commander le chariot (1) en activant des mesures de sécurité, telles que l'activation automatique des freins ou la diminution automatique de la traction.

13. Chariot industriel (1) ayant un système de commande selon une quelconque des revendications 7 à 12.
